# EUROPÄISCHE PATENTSCHRIFT

(11) **EP 3 600 589 B1**
(45) Veröffentlichungstag und Bekanntmachung des Hinweises auf die Patenterteilung: **11.10.2023**
(21) Anmeldenummer: 18712842.6
(22) Anmeldetag: 15.03.2018
(51) Int. Cl.: B01D 3/16, B01D 3/32, B01D 3/18, B01D 3/22

(54) **BODEN FÜR EINE STOFFAUSTAUSCHKOLONNE**
TRAY FOR A MASS-TRANSFER COLUMN
FOND POUR UNE COLONNE D'ÉCHANGE DE MATIÈRE

(30) Priorität: 22.03.2017 DE 102017106177
(43) Veröffentlichungstag der Anmeldung: 05.02.2020
(73) Patentinhaber: thyssenkrupp Uhde GmbH, 44141 Dortmund (DE); thyssenkrupp AG, 45143 Essen (DE)
(72) Erfinder: MINNE, Pascal, 44141 Dortmund (DE); HONECKER, Horst, 44534 Lünen (DE)
(74) Vertreter: thyssenkrupp Intellectual Property GmbH
(86) Internationale Anmeldenummer: PCT/EP2018/056575
(87) Internationale Veröffentlichungsnummer: WO 2018/172188

(56) Entgegenhaltungen:
- CH-A5- 655 448
- DD-A1- 86 168
- DE-A1- 1 957 458
- DE-B- 1 249 846

## Beschreibung

### TECHNISCHES GEBIET

Die vorliegende Schrift betrifft Ausführungsformen eines Bodens für eine Stoffaustauschkolonne, wie eine Absorptionskolonne, eine Rektifikationskolonne, eine Strippkolonne oder eine Destillationskolonne. Außerdem betrifft die Schrift Ausführungsformen einer Stoffaustauschkolonne, die eine Vielzahl derartiger Böden umfasst.

### HINTERGRUND

Stoffaustauschkolonnen, wie eine Absorptionskolonne, eine Rektifikationskolonne, eine Strippkolonne oder eine Destillationskolonne, sind bereits seit Jahrzehnten im chemischen Anlagenbau vorzufinden.

Beispielsweise erfolgt in einer Stoffaustauschkolonne eine Stofftrennung durch intensiven Kontakt einer Flüssigphase mit einer Gasphase. Dabei kann die Flüssigphase von oben nach unten durch die Stoffaustauschkolonne laufen, und die Gasphase kann in entgegengesetzter Richtung von unten nach oben durch die Stoffaustauschkolonne geführt werden.

Um den Kontakt zwischen der Flüssigphase unter Gasphase sicherzustellen, kann in der Stoffaustauschkolonne eine Vielzahl übereinander angeordnete Böden vorgesehen sein, wobei die Böden jeweils als Querströmboden ausgebildet sein können, bei dem die Flüssigkeit über den Boden läuft.

Weiter können in einem jeweiligen Boden Stoffaustauschelemente vorgesehen sein, wie Gasdurchtrittsöffnungen, durch die das aufstrebende Gas durch die Flüssigkeit aufsteigt.

Die übereinander angeordneten Böden können mittels Zulaufschächten bzw. Ablaufschächten miteinander verbunden sein. Derartige Schächte können die Flüssigphase auf den nächsten Boden leiten und z.B. als Führung entgaster Flüssigkeit von einem Boden zum darunterliegenden Boden dienen. Solche Schächte sind auch unter dem Begriff Downcomer bekannt.

Die Druckschrift WO 2013/072353 A1 offenbart in diesem Zusammenhang einen Boden für eine Stoffaustauschkolonne mit Gasdurchtrittsöffnungen, die über dem Boden verteilt angeordnet sind, sowie mindestens einem Leitblech zur Strömungsumlenkung von auf dem Boden strömender Flüssigkeit, wobei der Boden über mindestens einen Zulauf mit einer Flüssigkeit beschickt werden kann, wobei der Boden mindestens einen Zulauf, mindestens ein Trennwehr, das die einströmende Flüssigkeit in zwei Ströme trennt, und mindestens zwei Abläufe aufweist oder mindestens zwei Zuläufe und mindestens einen Ablauf für die Flüssigkeit aufweist, wobei jeder Strom entlang eines Strömungsweges zu einem Ablauf strömt. Als weiterer Stand der Technik können die DE69503624T2 und DE1249846 genannt werden.

Aufgabe der vorliegenden Erfindung ist es, einen Boden für eine Stoffaustauschkolonne bereitzustellen, der gegenüber dem vorbekannten Boden verbesserte Eigenschaften hinsichtlich seiner Fertigung und/oder hinsichtlich des thermodynamischen Verhaltens beim Stoffaustausch bietet.

### BESCHREIBUNG

Zur Lösung der vorstehenden Aufgabe wird ein Boden für eine Stoffaustauschkolonne gemäß dem unabhängigen Anspruch 1 vorgeschlagen. Der Boden ist ausgebildet, um einen Kontakt zwischen einer Flüssigphase und einer Gasphase zu ermöglichen.

Gemäß einer Ausführungsform umfasst der Boden: einen Bodenzulauf, über den der Boden mit der Flüssigphase beschickt wird; einen Bodenablauf, über den die Flüssigphase von dem Boden abläuft; erste Führungsmittel zum Führen der Flüssigphase, wobei die ersten Führungsmittel einen ersten Verlaufspfad ausbilden, entlang dem die Flüssigphase vom Bodenzulauf zum Bodenablauf strömt; einen Einlass für ein Temperierfluid; einen Auslass für das Temperierfluid; und zweite Führungsmittel zum Führen des Temperierfluids für einen Wärmeaustausch mit der Flüssigphase, wobei die zweiten Führungsmittel einen mit dem ersten Verlaufspfad überlappenden zweiten Verlaufspfad ausbilden, der vom Einlass zum Auslass führt. Die ersten Führungsmittel zum Führen der Flüssigphase bilden den ersten Verlaufspfad mit wenigstens zwei konzentrisch zueinander angeordneten und jeweils teilkreisbahnförmig verlaufenden Teilpfaden aus. Dabei strömt das Temperierfluid entlang des zweiten Verlaufspfads in wenigstens einem der wenigstens zwei Teilpfade in einer zur Strömungsrichtung der Flüssigphase entgegengesetzten Richtung. Die Flüssigkeit strömt dabei in einem ersten der wenigstens zwei Teilpfade entlang einer Drehrichtung und in einem zweiten Teilpfad in entgegengesetzter Drehrichtung.

Beispielsweise erstreckt sich also der zweite Verlaufspfad vollständig oder nahezu vollständig entlang des ersten Verlaufspfads, sodass dort, wo der Wärmeaustausch zwischen der Flüssigphase und dem Temperierfluid stattfindet, wenigstens in einem der Teilpfade das Temperierfluid entgegengesetzt zur Strömungsrichtung der Flüssigphase strömt. Beispielsweise "sieht" also die strömende Flüssigphase während ihres Weges vom Bodenzulauf hin zum Bodenablauf streckenabschnittsweise ein ihr entgegen strömendes Temperierfluid. Auf diese Weise kann ein verbesserter Energieaustausch zwischen der Flüssigphase und den Temperierfluid stattfinden.

Der Wärmeaustausch kann entweder durch Aufnahme von Wärme der Flüssigphase durch das Temperierfluid oder durch Abgabe von Wärme durch das Temperierfluid erfolgen. Im ersten Fall findet also eine Kühlung der Flüssigphase statt, und im zweiten Fall eine Erwärmung der Flüssigphase. Welcher Fall zur Anwendung kommt, hängt von den jeweiligen prozesstechnischen Erfordernissen ab.

Außerdem können aufgrund der teilkreisbahnförmig verlaufenen Teilpfade des ersten Verlaufspfads und des zweiten, mit dem ersten Verlaufspfad überlappenden Verlaufspfad die ersten Führungsmittel für die Flüssigphase und die zweiten Führungsmittel für das Temperierfluid kostengünstig gefertigt werden.

Nachfolgend werden weitere beispielhafte und optionale Merkmale weiterer Ausführungsformen des Bodens vorgestellt werden. Diese Merkmale können zur Ausbildung noch weiterer Ausführungsformen miteinander kombiniert werden, sofern sie nicht ausdrücklich als alternativ zu einander bezeichnet werden. Dabei wird anstelle des Begriffs "Flüssigphase" auch der Begriff "Flüssigkeit" verwendet, wobei beide Begriffe dieselbe Bedeutung haben. Analoges gilt für die Begriffe "Gasphase" und "Gas".

Bei einer Ausführungsform umfasst der Bodenzulauf einen ersten Eingang, der an einem Rand des Bodens angeordnet ist. Weiter kann vorgesehen sein, dass der Bodenablauf einen ersten Ausgang umfasst, der in einem Zentrum des Bodens angeordnet ist, und dass die ersten Führungsmittel konzentrisch angeordnete Leitwehre umfassen, die den ersten Verlaufspfad ausbilden. Der Boden kann beispielsweise kreisförmig ausgestaltet sein und durch einen Bodenrand begrenzt sein. In der Mitte des kreisförmigen Bodens ist das Bodenzentrum angeordnet, wobei darunter nicht unbedingt ein Punkt zu verstehen ist, sondern auch ein zentral angeordnete kleine Teilfläche der Gesamtfläche des Bodens. Die konzentrisch angeordneten Leitwehre bilden bei dieser Ausführungsform die teilkreisbahnförmig verlaufenden Teilpfade aus, was an späterer Stelle, insbesondere mit Blick auf die beiliegenden Zeichnungen, näher ausgeführt werden wird.

Die konzentrische Anordnung der Teilpfade kann beispielsweise derart ausgestaltet sein, dass jeder Teilpfad mit Bezug auf das Bodenzentrum einen bestimmten Radius aufweist, wobei ein äußerer Teilpfad einen maximalen Radius aufweist, und sich der Radius mit jedem Teilpfad verringert, sodass ein innerer Teilpfad einen minimalen Radius aufweist.

Bei einer weiteren Ausführungsform beschreiben alle Teilpfade des ersten Verlaufspfads eine Drehung von wenigstens 90° und von höchstens 180°. Beispielsweise kann vorgesehen sein, dass die Teilpfade eine Drehung von etwas weniger als 180° beschreiben, beispielsweise eine Drehung im Bereich von 130° bis 175°.

Bei der erfinderischen Ausführungsform ist vorgesehen, dass die Flüssigphase in einem ersten der wenigstens zwei Teilpfade des ersten Verlaufspfads entlang einer Drehrichtung strömt, und in einem zweiten der wenigstens zwei Teilpfade in entgegengesetzter Drehrichtung. Um besagtes Gegenstromprinzip zwischen Flüssigphase und Temperierfluid zu verwirklichen, kann vorgesehen sein, dass sich das Temperierfluid in beiden hier beispielhaft genannten Teilpfaden jeweils nur in Drehrichtung oder nur in entgegengesetzter Drehrichtung bewegt, sodass es in wenigstens einem der beiden Teilpfade dazu kommt, dass die strömende Flüssigphase ein ihr entgegen strömendes Temperierfluid "sieht".

Bei einer Weiterbildung kann vorgesehen sein, dass die zweiten Führungsmittel zum Führen des Temperierfluids den zweiten Verlaufspfad mit einer Vielzahl konzentrisch zueinander angeordneter und jeweils teilkreisbahnförmig verlaufender Einzelpfade ausbilden. Diese Einzelpfade des zweiten Verlaufspfads überlappen beispielsweise mit dem ersten Verlaufspfad für die Flüssigphase. Dabei können die Führungsmittel als Rohrleitungen ausgebildet sein, die für einen Kontakt mit der Flüssigphase angeordnet sind und sich parallel zum ersten Verlaufspfad erstrecken.

Beispielsweise beschreiben sämtliche Einzelpfade im Wesentlichen eine Halbkreisbahn, die aus dem Einlass heraustreten und in den Auslass münden. Diese Einzelpfade überlappen mit den Teilpfaden des ersten Verlaufspfads der Flüssigphase, sodass es im wenigstens einem der Teilpfade zum besagten Gegenstromprinzip kommt, bei dem das Temperierfluid und die Flüssigphase in zueinander entgegengesetzten Drehrichtungen strömen, und in wenigstens einem anderen Teilpfad ein Gleichstromprinzip verwirklicht wird, bei dem das Temperierfluid und die Flüssigphase in gleichen Drehrichtungen strömen.

Hierzu kann es zweckmäßig sein, dass der Einlass und der Auslass für das Temperierfluid entlang einer das Bodenzentrum kreuzenden Längsachse angeordnet sind, wobei die Längsachse dem Boden in einen ersten Abschnitt und einen zweiten Abschnitt unterteilt. Bei beiden Abschnitten kann es sich entsprechend dem Vorstehenden um im Wesentlichen halbkreisförmige Hälften des kreisförmig ausgebildeten Bodens handeln.

Zum Beispiel sind bei einer Ausführungsform der Einlass und der Auslass für das Temperierfluid um 180° zueinander versetzt angeordnet, und die im ersten Abschnitt des Bodens vorgesehenen Einzelpfade des zweiten Verlaufspfads führen das Temperierfluid nur in einer Drehrichtung, und die im zweiten Abschnitt des Bodens vorgesehenen Einzelpfade des zweiten Verlaufspfads führen das Temperierfluid nur in entgegengesetzter Drehrichtung. Somit können die konzentrisch zueinander angeordneten Einzelpfade jeweils aus dem Einlass austreten und im Wesentlichen entlang einer Halbkreisbahn hin zum Auslass führen, in welchen sie münden.

Beispielsweise decken die Einzelpfade den überwiegenden Teil des Bodens ab, und so kann es zweckmäßig sein, dass sich der Einlass für das Temperierfluid vom Bodenrand aus hin zum Bodenzentrum erstreckt, beispielsweise entlang einer Länge, die wenigstens 80% des Radius des Bodens beträgt. Ebenso kann es zweckmäßig sein, dass sich der Auslass für das Temperierfluid vom Bodenrand aus hin zum Bodenzentrum entlang einer Länge von wenigstens 80% des Radius des Bodens erstreckt.

Bei einer weiteren Ausführungsform umfassen die ersten Führungsmittel wenigstens drei im ersten Abschnitt des Bodens angeordnete erste Leitwehre, die dort den ersten Verlaufspfad für die Flüssigphase mit wenigstens drei aneinander anknüpfenden Teilpfaden ausbilden, die konzentrisch zueinander verlaufen, also in radialer Richtung zueinander versetzt angeordnet sein können, wobei die Flüssigphase wenigstens drei Teilpfade durchläuft und sich ihre Strömungsrichtung mit jedem Übergang zwischen zwei Teilpfaden um 180° ändert. Bildlich gesprochen verläuft also beispielsweise ein erster Teilpfad des ersten Verlaufspfads entlang einer äußeren Teilkreisbahn und beschreibt eine Drehung um fast 180°, beispielsweise um 170°. Erreicht die Flüssigphase das Ende des ersten Teilpfads, dreht sich ihre Strömungsrichtung um 180°, so dass die Flüssigphase im zweiten, an den ersten Teilpfad anschließenden Teilpfad in entgegengesetzter Drehrichtung strömt und dabei eine Drehung um wiederum fast 180°, beispielsweise um 170° beschreibt. Am Ende des zweiten Teilpfads angelangt dreht sich die Strömungsrichtung der Flüssigphase um 180°, um im dritten, an den zweiten Teilpfad anschließenden teilkreisbahnförmigen Teilpfad in Drehrichtung (wie im ersten Teilpfad) weiter zu strömen. Entweder mündet die Strömung der Flüssigphase am Ende des dritten Teilpfads dann in den am Bodenzentrum vorgesehenen ersten Ausgang des Bodenablaufs, oder vollzieht eine oder mehrere weitere Halbkreisdrehungen entsprechend dem vorstehend geschilderten Muster.

Bei einer Weiterbildung umfasst der Bodenzulauf einen zweiten Eingang, der am Bodenrand angeordnet ist, und der Bodenablauf umfasst einen zweiten Ausgang, der im Bodenzentrum angeordnet ist. Dabei können sich der erste Eingang und der erste Ausgang im ersten Abschnitt des Bodens befinden, und der zweite Eingang und der zweite Ausgang können sich im zweiten Abschnitt des Bodens befinden. Außerdem kann bei dieser Weiterbildung vorgesehen sein, dass die Führungsmittel wenigstens drei im zweiten Abschnitt des Bodens angeordnete zweite Leitwehre umfassen, die dort den ersten Verlaufspfad mit wenigstens drei aneinander anknüpfende Teilpfaden ausbilden, die konzentrisch zueinander verlaufen, also in radialer Richtung zueinander versetzt angeordnet sein können, wobei die Flüssigphase die wenigstens drei Teilpfade durchläuft und sich ihre Strömungsrichtung mit jedem Übergang zwischen zwei Teilpfaden um 180° ändert, beispielsweise in einer Art und Weise, wie es oben für den ersten Abschnitt dargestellt worden ist.

Nach einer Ausführungsform können also der erste Abschnitt des Bodens und der zweite Abschnitt des Bodens hinsichtlich der Führung der Flüssigphase und des Temperierfluids spiegelsymmetrisch, bezogen auf die Längsachse, ausgestaltet sein.

Beispielsweise können die ersten Führungsmittel eine entlang der Längsachse angeordnete Trennwehranordnung umfassen, die die Flüssigphase im ersten Abschnitt von der Flüssigphase im zweiten Abschnitt trennt. Die Trennwehranordnung kann z.B. sicherstellen, dass die Flüssigphase in zwei separaten Strömungspfaden geführt werden kann, nämlich entlang einem Strömungspfad im ersten Abschnitt und separat davon entlang einem Strömungspfad im zweiten Abschnitt.

Zum Beispiel sind sämtliche von den ersten Führungsmitteln ausgebildete Teilpfade und sämtliche von zweiten Führungsmitteln ausgebildete Einzelpfade im Wesentlichen halbkreisbahnförmig, wie oben beispielhaft dargestellt worden ist. Mit jedem Übergang zwischen zwei Teilpfaden kann sich die Strömungsrichtung der Flüssigphase um 180° ändern, wobei aufgrund der Halbkreisbahnform der Teilpfade diese Strömungsrichtungsänderung der Flüssigphase einer Vorzeichenänderung der Drehrichtung gleichkommt. Beispielsweise ändert sich die Strömungsrichtung der Flüssigphase im ersten Abschnitt und im zweiten Abschnitt des Bodens jeweils mindestens zweimal um 180°, wobei die Gesamtanzahl der Strömungsrichtungsänderungen um 180° im jeweiligen Abschnitt eine ungerade Anzahl sein kann.

Die oben erwähnten Leitwehre der ersten Führungsmittel für die Flüssigphase erstrecken sich beispielsweise nach Art eines Zylinderwandabschnitts vom Boden aus entgegen der Lotrichtung. Dabei kann ein Leitwehr zur Begrenzung von zwei aufeinanderfolgenden Teilpfaden des ersten Verlaufspfads dienen. Aufgrund des oben angesprochenen Strömungsrichtungswechsels der Flüssigphase mit jedem Übergang zwischen zwei Teilpfaden strömt die Flüssigphase an einem solchen Leitwehr gegenläufig, beispielsweise auf der einen Seite im Uhrzeigersinn und auf der anderen Seite, also im anderen Teilpfad, gegen den Uhrzeigersinn. Dies kann zu Homogenisierung des Stoffaustauschprozesses beitragen, beispielsweise eine über die Fläche homogenisierte Absorption der Gasphase durch die Flüssigphase begünstigen.

Einige Ausführungsformen sehen durch entsprechende Ausgestaltung des ersten Verlaufspfads für die Flüssigphase und des zweiten Verlaufspfads für das Temperierfluid die wenigstens teilweise Verwirklichung eines Gegenstromprinzip vor, wonach das Temperierfluid entgegengesetzt zur Strömungsrichtung der Flüssigphase auf dem Boden fließt, was einen verbesserten Energieaustausch gewährleisten kann.

Das Temperierfluid kann ein Gas bzw. Dampf oder eine Flüssigkeit sein. Beispielsweise ist eine Fluidantriebsvorrichtung vorgesehen, wie eine Pumpe, die das Gas bzw. den Dampf oder die Flüssigkeit entlang dem zweiten Verlaufspfad strömen lässt.

Die zweiten Führungsmittel können, wie gesagt, Rohrleitungen umfassen, wobei ein Biegeradius der Rohrleitungen entlang wenigstens 80% des gesamten zweiten Verlaufs größer ist als ein vorgegebener Minimalwert. Der Minimalwert kann so gewählt sein, dass materialspezifische Grenzen nicht überschritten werden. Insbesondere kann die halbkreisförmige Anordnung der Rohrleitungen einen vergleichsweise großen Biegeradius erlauben. Demgegenüber sind zur Realisierung eines mäanderförmigen Verlaufs, wie er beispielsweise aus der eingangs genannten Druckschrift WO 2013/072353 A1 bekannt ist, kleine Biegeradien notwendig, um die 180° Wendungen auf engem Raum umzusetzen. Der große Biegeradius stellt deutlich geringere Anforderungen an die mechanische Beschaffenheit des Materials der Rohrleitungen, womit das Material der Rohrleitungen hinsichtlich anderer Eigenschaften, beispielsweise hinsichtlich der Korrosionsbeständigkeit, optimiert werden kann, nicht aber mit Blick auf möglichst geringe Biegeradius ausgewählt werden muss.

Die Rohrleitungen zur Führung des Temperierfluids können sich, wie oben schon angedeutet, entlang des gesamten oder wenigstens nahezu entlang des gesamten ersten Verlaufspfads erstrecken, beispielsweise derart, dass die Flüssigphase in direkten Kontakt mit den Außenwänden der Rohrleitungen tritt. Mit anderen Worten können sich die Rohrleitungen parallel zum Strömungsweg der Flüssigphase erstrecken. Dabei können mehrere Rohrleitungen nebeneinander angeordnet werden, beispielsweise bis zu zehn Rohrleitungen, und die Rohrleitungen können auch in mehreren Lagen vorgesehen sein, beispielsweise in drei übereinanderliegenden Lagen.

Der Boden kann z.B. als Siebboden, Ventilboden, Glockenboden oder Tunnelboden ausgestaltet sein. Der Kontakt zwischen der Flüssigphase und der Gasphase kann beispielsweise durch eine Vielzahl von Stoffaustauschelementen sichergestellt werden, wobei die Stoffaustauschelemente in dem Boden vorgesehene Gasdurchtrittsöffnungen (z.B. Sieblöcher), feststehende Ventile, bewegliche Ventile, Glocken oder Tunnel aufweisen können.

Vorgeschlagen wird hier auch eine Stoffaustauschkolonne, umfassend eine Vielzahl von übereinander angeordneten Böden, die jeweils entsprechend einer der vorstehend beschriebenen Ausführungsformen ausgestaltet sind. Die Stoffaustauschkolonne kann eine Absorptionskolonne, eine Rektifikationskolonne, eine Strippkolonne oder eine Destillationskolonne sein.

Beispielsweise handelt es sich bei der Stoffaustauschkolonne um eine Absorptionskolonne zur Herstellung von Salpetersäure.

Weitere Merkmale und Vorteile werden dem Fachmann in Anbetracht des Studiums der nachfolgenden detaillierten Beschreibung sowie des Sichtens der begleitenden Zeichnungen deutlich.

### KURZE BESCHREIBUNG DER ZEICHNUNGEN

Die in den Figuren gezeigten Teile sind nicht notwendigerweise maßstabsgetreu; vielmehr liegt die Betonung in dem Darstellen von Prinzipien der Erfindung. Ferner bezeichnen in den Figuren gleich Bezugszeichen einander entsprechende Teile.

In den Figuren zeigen:

- Fig. 1: schematisch und exemplarisch eine horizontale Querschnittsansicht eines Abschnitts eines Bodens für eine Stoffaustauschkolonne gemäß einer oder mehreren Ausführungsformen;
- Fig. 2: schematisch und exemplarisch eine vertikale Querschnittsansicht eines Abschnitts eines Bodens für eine Stoffaustauschkolonne gemäß einer oder mehreren Ausführungsformen;
- Fig. 3: schematisch und exemplarisch eine vertikale Querschnittsansicht eines Abschnitts eines Temperierfluid-Einlasses eines Bodens für eine Stoffaustauschkolonne gemäß einer oder mehreren Ausführungsformen;
- Fig. 4: schematisch und exemplarisch eine vertikale Querschnittsansicht eines Abschnitts eines Temperierfluid-Auslasses eines Bodens für eine Stoffaustauschkolonne gemäß einer oder mehreren Ausführungsformen; und
- Fig. 5 und 6: jeweils schematisch und exemplarisch eine vertikale Querschnittsansicht eines Abschnitts einer Stoffaustauschkolonne gemäß einer oder mehreren Ausführungsformen.

### DETAILLIERTE BESCHREIBUNG

In der folgenden detaillierten Beschreibung wird auf die begleitenden Zeichnungen Bezug genommen, die dazugehören und in denen durch die Veranschaulichung spezifischer Ausführungsformen gezeigt wird, wie die Erfindung in die Praxis umgesetzt werden kann.

In diesem Zusammenhang kann richtungsangebende Terminologie, wie beispielsweise "oben", "unten", "außen", "innen" etc., mit Bezug auf die Ausrichtung der Figuren, die beschrieben werden, verwendet werden. Da Teile von Ausführungsformen in einer Reihe von unterschiedlichen Ausrichtungen positioniert sein können, kann die richtungsangebende Terminologie zu Zwecken der Veranschaulichung verwendet werden und ist keinesfalls einschränkend. Es wird darauf hingewiesen, dass andere Ausführungsformen angewandt werden können und strukturelle oder logische Veränderungen ausgeführt werden können, ohne vom Schutzumfang der vorliegenden Erfindung abzuweichen. Die folgende detaillierte Beschreibung ist daher nicht in einem einschränkenden Sinn zu verstehen, und der Schutzumfang der vorliegenden Erfindung ist durch die angefügten Ansprüche definiert.

Bezug wird nunmehr im Detail auf verschiedene Ausführungsformen und auf ein oder mehrere Beispiele, die in den Figuren veranschaulicht sind, genommen. Jedes Beispiel wird in erläuternder Art und Weise präsentiert und ist nicht als eine Einschränkung der Erfindung zu deuten. Beispielsweise können veranschaulichte oder als Teil einer Ausführungsform beschriebene Merkmale auf oder im Zusammenhang mit anderen Ausführungsformen angewandt werden, um noch eine weitere Ausführungsform hervorzubringen. Dass die vorliegende Erfindung derartige Modifizierungen und Variationen umfasst, ist beabsichtigt. Die Beispiele werden unter Anwendung einer spezifischen Sprache beschrieben, die nicht als den Schutzumfang der angefügten Ansprüche einschränkend ausgelegt werden sollte. Die Zeichnungen sind keine maßstabgetreue Wiedergabe und dienen lediglich der Veranschaulichung. Zum besseren Verständnis sind, wenn nicht anders angegeben, dieselben Elemente durch dieselben Bezugsziffern in den verschiedenen Zeichnungen gekennzeichnet worden.

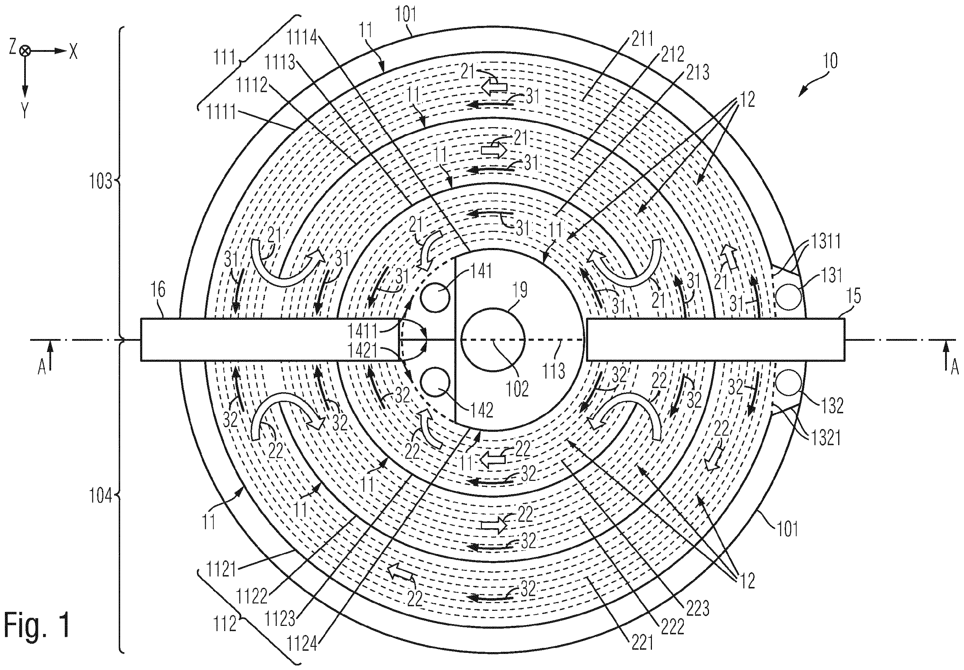

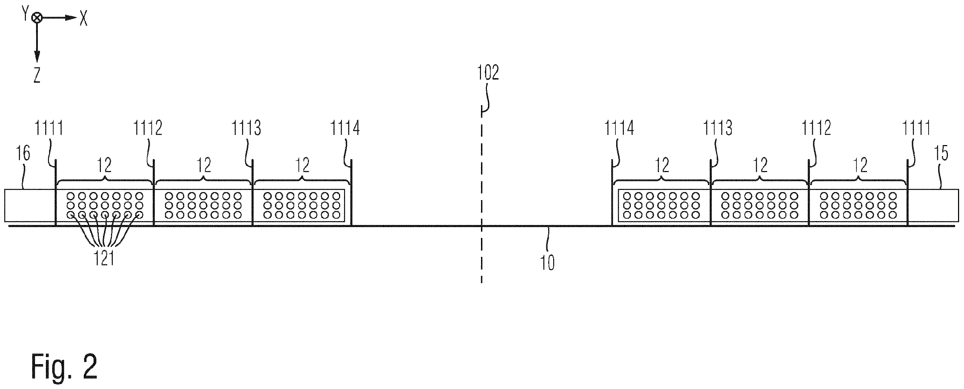

Fig. 1 zeigt schematisch und exemplarisch eine horizontale Querschnittsansicht in der XY-Ebene eines Abschnitts eines Bodens 10 für eine Stoffaustauschkolonne gemäß einer oder mehreren Ausführungsformen, und die Fig. 2 zeigt hierzu schematisch und exemplarisch eine vertikale Querschnittsansicht in der XZ-Ebene an der Schnittlinie A. Auf beide Figuren wird nachstehend Bezug genommen.

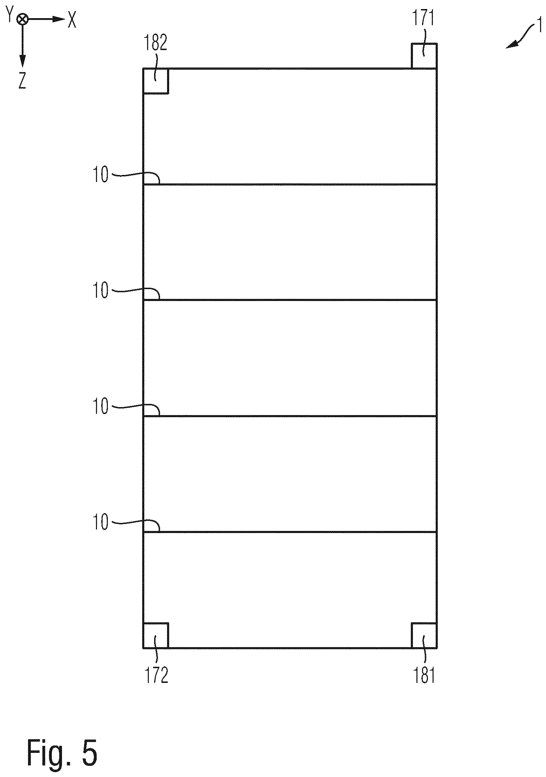

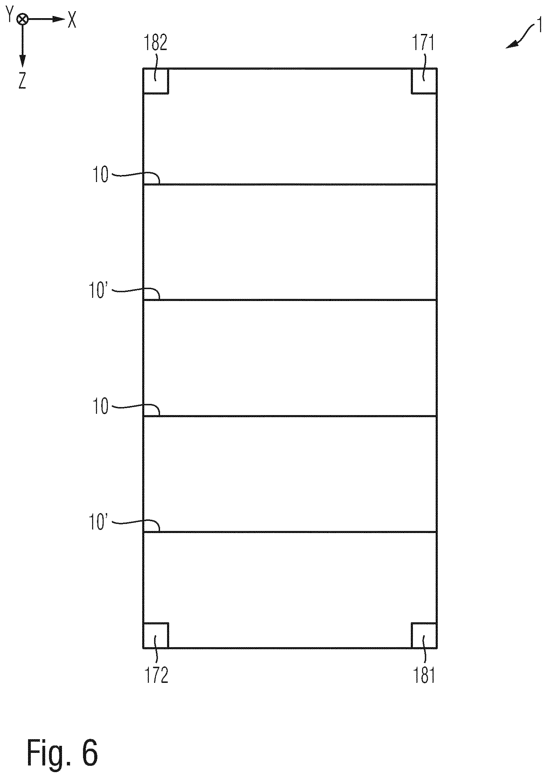

Der Boden 10 für eine Stoffaustauschkolonne (s. Bezugsziffer 1 in den Fig. 5 und Fig. 6) umfasst einen Bodenzulauf 131, 132, über den der Boden 10 mit einer Flüssigphase beschickt wird, und einen Bodenablauf 141, 142, über den die Flüssigphase von dem Boden 10 abläuft. Der Boden 10 kann kreisförmig ausgestaltet sein, und außerdem durch einen Bodenrand 101 begrenzt sein sowie ein Bodenzentrum 102 aufweisen. Der Boden 10 ist ausgebildet, um einen Kontakt zwischen der Flüssigphase und einer Gasphase zu ermöglichen.

Außerdem kann der Boden 10 durch eine Längsachse A in einen ersten Abschnitt 103 und in einen zweiten Abschnitt 104 unterteilt sein, die jeweils in etwa halb kreisförmig ausgebildet sein können. Wie nachstehend erläutert werden wird, kann der Boden 10 hinsichtlich einiger Komponenten bezogen auf die Längsachse A spiegelsymmetrisch ausgebildet sein.

Der Bodenzulauf umfasst beispielsweise einen am Bodenrand 101 angeordneten ersten Eingang 131, der sich im ersten Abschnitt 103 befindet, sowie einen ebenfalls am Bodenrand 101 angeordneten zweiten Eingang 132, der sich im zweiten Abschnitt 104 befindet. Über diese beiden Eingänge 131, 132 des Bodenzulaufs kann der Boden 10 beispielsweise die Flüssigphase von einem darüber liegenden Boden empfangen oder von einem Haupteingang für die Flüssigphase der Stoffaustauschkolonne.

Korrespondierend dazu kann der Bodenablauf beispielsweise einen im Bodenzentrum 102 vorgesehenen ersten Ausgang 141, der sich im ersten Abschnitt 103 befindet, sowie einen ebenfalls im Bodenzentrum 102 vorgesehenen zweiten Ausgang 142, der sich im zweiten Abschnitt 104 befindet. Über diese beiden Ausgänge 141 und 142 fließt die Flüssigkeit vom Boden 10 ab, beispielsweise hin zu einem darunterliegenden Boden der Stoffaustauschkolonne oder zu einem Hauptausgang der Stoffaustauschkolonne.

Außerdem kann im Bodenzentrum 102 ein sogenanntes Mannloch 19 vorgesehen sein, über das eine Begehung des Bodens, beispielsweise durch Inspektoren, erfolgen kann.

Der Bodenzulauf kann an seinen Eingängen 131 und 132 jeweils ein Zulaufwehr 1311 bzw. 1321 umfassen, um einen Pegel der Flüssigphase auf dem Boden 10 einzustellen. Außerdem kann auf Seiten des Bodenablaufs in der Nähe der beiden Ausgänge 141 und 142 ein jeweiliges Ablaufwehr 1411 bzw. 1421 vorgesehen sein. Derartige Wehre sind dem Fachmann als solche bekannt und bedürfen hier keiner weiteren Ausführung.

Weiter sind erste Führungsmittel 11 zum Führen der Flüssigphase vorgesehen, wobei die ersten Führungsmittel 11 einen ersten Verlaufspfad 21, 22 ausbilden, entlang dem die Flüssigphase vom Bodenzulauf 131, 132 hin zum Bodenablauf 141, 142 strömt, wobei der erste Verlaufspfad 21, 22 ausgebildet sein kann, um die Flüssigphase auf dem Boden 10 zu führen. Der Kontakt zwischen der Flüssigphase der Gasphase kann beispielsweise durch Stoffaustauschelemente sichergestellt werden, wie beispielsweise Gasdurchtrittsöffnungen (nicht dargestellt), die im Boden 10 verteilt angeordnet sein können. Auch derartige Stoffaustauschelemente sind dem Fachmann grundsätzlich bekannt und werden hier nicht weiter erläutert. Die vorliegende Erfindung ist insbesondere nicht auf bestimmte Stoffaustauschelemente beschränkt.

Zum Beeinflussen der Temperatur der Flüssigphase wird entlang dem ersten Verlaufspfad 21, 22 ein Temperierfluid geführt, das mit der Flüssigphase einen Wärmeaustausch vollzieht, entweder um die Flüssigphase zu kühlen, oder um diese zu erwärmen. Der Wärmeaustausch kann also entweder durch Aufnahme von Wärme der Flüssigphase durch das Temperierfluid oder durch Abgabe von Wärme durch das Temperierfluid an die Flüssigphase erfolgen. Im ersten Fall findet also eine Kühlung der Flüssigphase statt, und im zweiten Fall eine Erwärmung der Flüssigphase. Welcher Fall zur Anwendung kommt, hängt von den jeweiligen prozesstechnischen Erfordernissen ab.

Für diese Zwecke umfasst der Boden 10 einen Einlass 15 für das Temperierfluid sowie einen Auslass 16. Weiter sind zweite Führungsmittel 12 vorgesehen, die einen mit dem ersten Verlaufspfad 21, 22 überlappenden zweiten Verlaufspfad 31, 32 ausbilden, der vom Einlass 15 zum Auslass 16 führt. Das Temperierfluid kann ein Gas bzw. Dampf oder eine Flüssigkeit sein. Beispielsweise ist eine (nicht dargestellte) Fluidantriebsvorrichtung vorgesehen, wie eine Pumpe, die das Gas bzw. die Flüssigkeit entlang dem zweiten Verlaufspfad 31, 32 strömen lässt. Die zweiten Führungsmittel 12 können Rohrleitungen 121 umfassen, durch die das Temperierfluid geführt wird, was weiter unten näher erläutert werden wird.

Im Folgenden sollen zunächst bestimmte Ausgestaltungen der ersten Führungsmittel 11 zum Führen der Flüssigphase erläutert werden, und sodann wird auf die Führung des Temperierfluids mittels der zweiten Führungsmittel 12 eingegangen werden:
Die ersten Führungsmittel 11 zum Führen der Flüssigphase bilden den ersten Verlaufspfad 21, 22 mit wenigstens zwei konzentrisch zueinander angeordneten (also in radialer Richtung zueinander versetzte) und jeweils teilkreisbahnförmig verlaufenden Teilpfaden aus. Beim Ausführungsbeispiel gemäß der Fig. 1 sind insgesamt sechs Teilpfade vorgesehen, von denen drei Teilpfade 211, 212, 213 im ersten Abschnitt 103 vorgesehen sind, und die übrigen drei Teilpfade 221, 222 und 223 im zweiten Abschnitt 104.

Es versteht sich jedoch, dass die vorliegende Erfindung nicht auf eine derartige Anzahl von Teilpfaden beschränkt ist. Beispielsweise könnte auch vorgesehen sein, dass in jedem Abschnitt 103 und 104 nur zwei Teilpfade bereitgestellt sind, oder dass insgesamt nur zwei Teilpfade bereitgestellt sind, die sich über den Boden 10 erstrecken. Die Anzahl der Teilpfade könnte selbstverständlich auch größer als sechs sein, beispielsweise könnten in jedem Abschnitt 103 und 104 jeweils fünf Teilpfade vorgesehen sein.

Es hat sich jedoch als zweckmäßig herausgestellt, dass die Anzahl der Teilpfade im ersten Abschnitt 103 und im zweiten Abschnitt 104 gleich groß sein sollte, und dass die Anzahl der Teilpfade in jedem Abschnitt eine ungerade Anzahl sein sollte, wie aus dem Nachstehenden deutlich werden wird.

Alle Teilpfade des ersten Verlaufspfads 21, 22 können jeweils im Wesentlichen eine Halbkreisbahnform beschreiben, wie dies in der Fig. 1 exemplarisch und schematisch dargestellt ist.

Beispielsweise sind im ersten Abschnitt 103 des Bodens 10 wenigstens drei angeordnete erste Leitwehre 111 vorgesehen, die dort den ersten Verlaufspfad 21 mit wenigstens drei aneinander anknüpfende Teilpfade 211, 212 und 213 ausbilden, die konzentrisch zueinander verlaufen, wobei die Flüssigphase die wenigstens drei Teilpfade 211, 212, 213 durchläuft und sich ihre Strömungsrichtung mit jedem Übergang zwischen zwei Teilpfaden um 180° ändert. Weiter können die ersten Führungsmittel 11 wenigstens drei im zweiten Abschnitt 104 des Bodens 10 angeordnete zweite Leitwehre 112 umfassen, die dort den ersten Verlaufspfad 22 mit wenigstens drei aneinander anknüpfende Teilpfade 222, 222 und 223 ausbilden, die konzentrisch zueinander verlaufen, wobei die Flüssigphase die wenigstens drei Teilpfade 221, 222 und 223 durchläuft und sich ihre Strömungsrichtung mit jedem Übergang zwischen zwei Teilpfaden um 180° ändert.

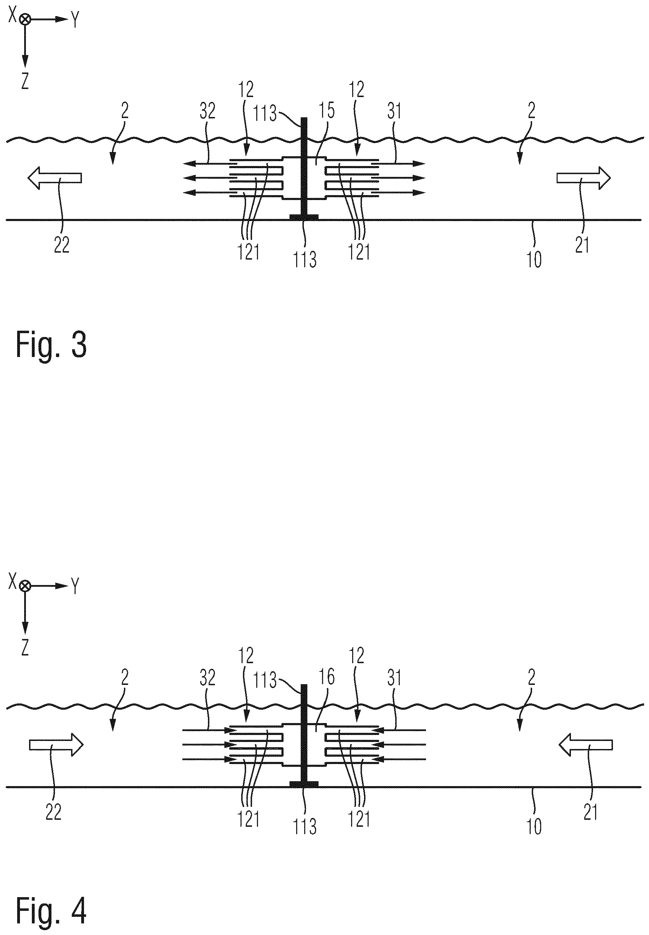

Die ersten Führungsmittel 11 können außerdem eine entlang der Längsachse A angeordnete Trennwehranordnung 113 (in Fig. 1 nicht dargestellt, s. Fig. 3 und Fig. 4) umfassen, die die Flüssigphase im ersten Abschnitt 103 von der Flüssigphase im zweiten Abschnitt 104 trennt. Die Trennwehranordnung 113 kann z.B. sicherstellen, dass die Flüssigphase in zwei separaten Strömungspfaden 21 und 22 geführt werden kann, nämlich entlang dem Strömungspfad 21 im ersten Abschnitt 103 und separat davon entlang dem Strömungspfad 22 im zweiten Abschnitt 104.

Konkret können die ersten Führungsmittel 11 bei dem Ausführungsbeispiel gemäß der Fig. 1 ausgebildet sein, die Flüssigphase wie folgt zu führen: Im ersten Abschnitt 103 wird der Boden 10 mit der Flüssigphase über den ersten Eingang 131 beschickt. Die Flüssigphase übertritt das Zulaufwehr 1311 und gelangt so in den ersten Teilpfad 211 des ersten Abschnitts 103. Der erste Teilpfad 211 ist durch die beiden Leitwehre 1111 und 1112 begrenzt. Das erste erste Leitwehr 1111 ist das äußerste Leitwehr und erstreckt sich beispielsweise vom Zulaufwehr 1311 bis hin zum längsaxial verlaufenden Trennwehr 113 und vollzieht dabei eine Drehung um fast 180°. Das nächst innere Leitwehr 1112 erstreckt sich andererseits vom Trennwehr 113 um nicht ganz 180° sondern schließt nach etwa 170° ab. Die Flüssigphase durchläuft also den ersten Teilpfad 211 entgegen dem Uhrzeigersinn, bis sie das Ende des Leitwehrs 1112 erreicht. Dort dreht sich die Strömungsrichtung um 180°, so dass die Flüssigphase den sich an den ersten Teilpfad 211 anschließenden zweiten Teilpfad 212 im Uhrzeigersinn durchströmt, wobei der zweite Teilpfad 212 ebenfalls im Wesentlichen halbkreisbahnförmig ausgebildet ist und zum einen durch das Leitwehr 1112 und ein nächst inneres Leitwehr 1113 begrenzt ist. Das Leitwehr 1113 erstreckt sich wiederum vom Trennwehr 113 nicht ganz um 180°, sondern schließt nach etwa 170° ab. Am Ende des zweiten Teilpfads 212 angelangt dreht sich die Strömungsrichtung wiederum um 180°, so dass die Flüssigphase in den letzten Teilpfad 213 gelangt, der schließlich am ersten Ausgang 141 des Bodenablaufs mündet. Auch der dritte Teilpfad 213 ist im Wesentlichen halbkreisbahnförmig ausgebildet, und nach innen hin durch das Leitwehr 1114 begrenzt. Die Flüssigphase durchläuft den dritten Teilpfad 213 wieder entgegen dem Uhrzeigersinn und überschreitet schließlich das erste Ablaufwehr 1411, um den Boden 10 dann über den ersten Ausgang 141 zu verlassen.

Spiegelsymmetrisch dazu kann die Führung der Flüssigphase im zweiten Abschnitt 104 ausgestaltet sein. Dort wird der Boden 10 mit der Flüssigphase über den zweiten Eingang 132 beschickt. Die Flüssigphase übertritt das Zulaufwehr 1321 und gelangt so in den ersten Teilpfad 221 des zweiten Abschnitts 104. Der erste Teilpfad 221 ist durch die beiden Leitwehre 1121 und 1122 begrenzt. Das erste zweite Leitwehr 1121 ist das äußerste Leitwehr des zweiten Abschnitts 104 und erstreckt sich beispielsweise vom Zulaufwehr 1321 bis hin zum längsaxial verlaufenden Trennwehr 113 und vollzieht dabei eine Drehung um fast 180°. Das nächst innere Leitwehr 1122 erstreckt sich andererseits vom Trennwehr 113 um nicht ganz 180° sondern schließt nach etwa 170° ab. Die Flüssigphase durchströmt also den ersten Teilpfad 221 im Uhrzeigersinn, bis sie das Ende des Leitwehrs 1122 erreicht. Dort dreht sich die Strömungsrichtung um 180°, so dass die Flüssigphase den sich an den ersten Teilpfad 221 anschließenden zweiten Teilpfad 222 des zweiten Abschnitts 104 gegen den Uhrzeigersinn durchströmt, wobei der zweite Teilpfad 222 ebenfalls im Wesentlichen halbkreisbahnförmig ausgebildet ist und zum einen durch das Leitwehr 1122 und ein nächst inneres Leitwehr 1123 begrenzt ist. Das Leitwehr 1123 erstreckt sich wiederum vom Trennwehr 113 nicht ganz um 180°, sondern schließt nach etwa 170° ab. Am Ende des zweiten Teilpfads 22 angelangt dreht sich die Strömungsrichtung wiederum um 180°, so dass die Flüssigphase in den letzten Teilpfad 223 des zweiten Abschnitts 104 gelangt, der schließlich am zweiten Ausgang 142 des Bodenablaufs mündet. Auch der dritte Teilpfad 223 ist im Wesentlichen halbkreisbahnförmig ausgebildet, und nach innen hin durch das Leitwehr 1124 begrenzt. Die Flüssigphase durchläuft den dritten Teilpfad 223 wieder im Uhrzeigersinn und überschreitet schließlich das zweite Ablaufwehr 1421, um den Boden 10 dann über den zweiten Ausgang 141 zu verlassen.

Bei einer weiteren Ausführungsform beschreiben alle Teilpfade 211, 212, 213, 221, 222, 223 des ersten Verlaufspfads eine Drehung von wenigstens 90° und von höchstens 180°. Die genaue Gradanzahl kann durch den Abschluss der Leitwehre 111, 112 eingestellt werden, wie aus dem vorstehenden Beispiel deutlich geworden ist. Beispielsweise kann vorgesehen sein, dass die Teilpfade eine Drehung von etwas weniger als 180° beschreiben, beispielsweise eine Drehung im Bereich von 130° bis 175°.

Nach einer Ausführungsform können die ersten Führungsmittel 11, beispielsweise umfassend die Anzahl von konzentrisch angeordneten Leitwehren, den ersten Verlaufspfad 21, 22 für die Flüssigphase in Gestalt mehrerer konzentrisch zueinander angeordneter Halbkreisbahnen ausbilden, die von der Flüssigphase nacheinander in alternierender Drehrichtung (im Uhrzeigersinn, gegen den Uhrzeigersinn) durchlaufen werden, wobei die Flüssigphase dabei vom Bodenrand 101 hin zum Bodenzentrum 102 läuft.

Die oben erwähnten Leitwehre 1111, 1112, 1113 und 1114 sowie 1121, 1122, 1123 und 1124 der ersten Führungsmittel 11 für die Flüssigphase erstrecken sich beispielsweise nach Art einer Zylinderwandabschnitts von Boden 10 aus entgegen der Lotrichtung. Dabei kann ein Leitwehr zur Begrenzung von zwei aufeinanderfolgenden Teilpfaden (z.B. das Leitwehr 1112, Pfade 211, 212) des ersten Verlaufspfads dienen. Aufgrund des oben angesprochenen Strömungsrichtungswechsel der Flüssigphase mit jedem Übergang zwischen zwei Teilpfaden strömt die Flüssigphase an einem solchen Leitwehr gegenläufig, beispielsweise auf der einen Seite im Uhrzeigersinn und auf der anderen Seite, also im anderen Teilpfad, gegen den Uhrzeigersinn. Dies kann zu Homogenisierung des Stoffaustauschprozesses beitragen, beispielsweise eine über die Fläche homogenisierte Absorption der Gasphase durch die Flüssigkeit begünstigen.

Wie bereits einleitend erläutert worden ist, umfasst der Boden 10 außerdem die zweiten Führungsmittel 12 zum Führen des Temperierfluids. Die zweiten Führungsmittel 12 sind für einen Wärmeaustausch mit der Flüssigphase angeordnet und ausgestaltet.

Die zweiten Führungsmittel 12 bilden insbesondere den zweiten Verlaufspfad 31, 32 für das Temperierfluid aus, beispielsweise mittels besagter Rohrleitungen, wie Heiz- oder Kühlschlangen. Der zweite Verlaufspfad 31, 32 überlappt mit dem ersten Verlaufspfad 21, 22, insbesondere in einer Art und Weise, die den Wärmeaustausch zwischen der Flüssigphase und den Temperierfluid ermöglicht.

Bei einer Ausführungsform ist vorgesehen, dass das Temperierfluid entlang des zweiten Verlaufspfads 31, 32 in wenigstens einem der Teilpfade des ersten Verlaufspfads 21, 22 der Flüssigphase in einer zur Strömungsrichtung der Flüssigphase entgegengesetzten Richtung strömt, wie dies durch die richtungsangebende Pfeile in der Fig. 1 dargestellt ist. Beispielsweise "sieht" also die entlang der Pfade 21 und 22 strömende Flüssigphase während ihres Weges in den beiden mittleren Teilpfaden 212 und 222 ein ihr entgegen strömendes Temperierfluid. Auf diese Weise kann ein verbesserter Energieaustausch (also Wärmeaustausch) zwischen der Flüssigphase und den Temperierfluid stattfinden.

Die zweiten Führungsmittel 12 zum Führen des Temperierfluids können den zweiten Verlaufspfad 31, 32 beispielsweise mit einer Vielzahl konzentrisch zueinander angeordneter und jeweils teilkreisbahnförmig verlaufender Einzelpfade ausbilden, wie dies in der Fig. 1 durch die gestrichelten Linien dargestellt ist. Jeder Einzelpfad kann durch eine Rohrleitung 121 realisiert sein.

Der Einlass 15 und der Auslass 16 für das Temperierfluid können entlang der das Zentrum des Bodens 102 kreuzenden Längsachse A angeordnet sein, welche den Boden 10, wie gesagt, in den ersten Abschnitt 103 und den zweiten Abschnitt 104 unterteilt. Weiter können der Einlass 15 und der Auslass 16 für das Temperierfluid um 180° zueinander versetzt angeordnet sein, so dass die im ersten Abschnitt 103 des Bodens 10 vorgesehenen Einzelpfade des zweiten Verlaufspfads 31 das Temperierfluid nur in einer Drehrichtung führen, und so dass die im zweiten Abschnitt 104 des Bodens 10 vorgesehenen Einzelpfade des zweiten Verlaufspfads 32 das Temperierfluid nur in entgegengesetzter Drehrichtung führen.

Zur exemplarischen Verdeutlichung des vorstehend Ausgeführten wird im Folgenden zusätzlich auf die Fig. 3 und die Fig. 4 verwiesen, die exemplarisch und beispielhaft eine vertikale Querschnittsansicht eines Abschnitts des Temperierfluid-Einlasses (Fig. 3) bzw. Auslasses (Fig. 4) darstellen.

Zum Beispiel erstreckt sich der Einlass 15 vom Bodenrand 101 aus in Richtung des Bodenzentrums 102, beispielsweise entlang wenigstens 80% des Radius des Bodens 10. Gleichermaßen kann sich der Auslass 16 vom Bodenrand 101 aus in Richtung des Bodenzentrums 102 erstrecken, beispielsweise ebenfalls entlang wenigstens 80% des Radius des Bodens 10. Der Einlass 15 wird mit dem Temperierfluid gespeist, und die Einzelpfade, beispielsweise gebildet durch die Rohrleitungen 121, des ersten Abschnitts 103 verlassen den Einlass 15 in einer Richtung entgegen dem Uhrzeigersinn (Verlauf 31), und die Einzelpfade des zweiten Abschnitts, beispielsweise ebenfalls gebildet durch die Rohrleitungen 121, verlassen den Einlass 15 in Richtung des Uhrzeigersinns (Verlauf 32).

Die Einzelpfade im ersten Abschnitt 103 führen das Temperierfluid jeweils entlang einer Halbkreisbahn 31 entgegen dem Uhrzeigersinn um etwa 180°, bis die Einzelpfade im Auslass 16 münden. Die Einzelpfade im zweiten Abschnitt 104 führen das Temperierfluid jeweils entlang einer Halbkreisbahn 32 im Uhrzeigersinn um etwa 180°, bis die Einzelpfade des zweiten Abschnitts 104 ebenfalls im Auslass 16 münden.

Aufgrund dieser beispielhaft dargestellten Führung des Temperierfluids durch die zweiten Führungsmittel 12 einerseits und der Flüssigphase 2 durch die ersten Führungsmittel 11 andererseits kommt es im jeweiligen mittleren Teilpfad 212 bzw. 222 zur Verwirklichung des Gegenstromprinzips, bei dem die Flüssigphase 2 ein ihr entgegen strömendes Temperierfluid "sieht". In den beiden inneren Teilpfaden 213 und 223 sowie den beiden äußeren Teilpfaden 211 und 221 strömen das Temperierfluid und die Flüssigphase in gleicher Drehrichtung (im ersten Abschnitt 103 entgegen dem Uhrzeigersinn, und im zweiten Abschnitt 104 im Uhrzeigersinn).

Die Ausgestaltung des Einlasses 15 sowie des Auslasses 16 kann in verschiedenen Weisen erfolgen. Insbesondere müssen der Einlass 15 und der Auslass 16 nicht notwendigerweise monolithisch ausgebildet sein, wie dies in den Fig. 3 und 4 schematisch angedeutet ist, sondern könnten beispielsweise auch zweihälftig ausgestaltet sein, oder es könnten zur Verwirklichung unterschiedlicher Fluidsteuerungskonzepte Teileinlässe bzw. Teilauslässe vorgesehen sein, um die Einzelpfade oder Gruppen von Einzelpfaden separat bedienen zu können. Auf diese Weise könnte beispielsweise auch in allen Teilpfaden 211, 212, 213, 221, 222, 223 das Gegenstromprinzip realisiert werden, wobei möglicherweise ein etwas erhöhter Konstruktionsaufwand aufzubringen wäre.

Aufgrund der teilkreisbahnartigen Führung sowohl des Temperierfluids als auch der Flüssigphase können die ersten Führungsmittel 11 und die zweiten Führungsmittel 12 vergleichsweise kostengünstig hergestellt werden. Insbesondere vermeidet die oben dargestellte Ausführungsform die Notwendigkeit enger Biegeradien, sowohl was die Leitwehre 111 und 112 anbelangt, als auch die Einzelpfade, die durch die Rohrleitungen 121 realisiert sein können.

Ein Biegeradius der Rohrleitungen 121 ist beispielsweise entlang wenigstens 80% des gesamten zweiten Verlaufs 31, 32 z.B. stets größer als ein vorgegebener Minimalwert. Bei einer Ausführungsform wird der Minimalwert des Biegeradius größer gewählt, als ein materialspezifischer, kritischer, minimaler Biegungsradius. Dieser vergleichsweise große Biegeradius kann sich aufgrund der halbkreisbahnartigen Verlaufsführung ergeben. Demgegenüber sind zur Realisierung eines mäanderförmigen Verlaufs, wie er beispielsweise aus der eingangs genannten Druckschrift WO 2013/072353 A1 bekannt ist, kleine Biegeradien notwendig, um die 180° Wendungen auf engem Raum umzusetzen. Der große Biegeradius stellt deutlich geringere Anforderungen an die mechanische Beschaffenheit des Materials der Rohrleitungen 121, womit das Material der Rohrleitungen 121 hinsichtlich anderer Eigenschaften, beispielsweise hinsichtlich der Korrosionsbeständigkeit, optimiert werden kann, nicht aber mit Blick auf möglichst geringe Biegeradius ausgewählt werden muss.

Nicht nur können die ersten Führungsmittel 11 und die zweiten Führungsmittel 12 vergleichsweise kostengünstig hergestellt werden, sondern die konzentrische Anordnung der Teilkreisbahnen, also der radiale Versatz der Teilpfade zueinander, erlaubt in einfacher Weise die Einstellung des Gesamtlaufweglängen bzw. die Verweilzeit der Flüssigphase auf dem Boden 10. So könnten beispielsweise die Teilpfade der Länge nach und/oder der Anzahl nach und/oder der jeweiligen Breite nach variiert werden, um Gesamtlaufweglängen bzw. Verweilzeiten einzustellen.

Die Rohrleitungen 121 zur Führung des Temperierfluids können sich, wie oben schon angedeutet, entlang des gesamten oder wenigstens nahezu entlang des gesamten ersten Verlaufspfads 21, 22 erstrecken, beispielsweise derart, dass die Flüssigphase in direkten Kontakt mit den Außenwänden der Rohrleitungen 121 tritt. Mit anderen Worten können sich die Rohrleitungen parallel zum Strömungsweg der Flüssigphase 2 erstrecken. Dabei können mehrere Rohrleitungen 121 nebeneinander angeordnet werden, beispielsweise sieben Rohrleitungen 121, und die Rohrleitungen 121 können auch in mehreren Lagen vorgesehen sein, beispielsweise in drei übereinanderliegenden Lagen, wie dies in der Fig. 2 und auch in den Fig. 3 und 4 dargestellt ist.

Der Boden 10 kann als Siebboden, Ventilboden, Glockenboden oder Tunnelboden ausgestaltet sein.

Fig. 5 und 6 zeigen jeweils schematisch und exemplarisch eine vertikale Querschnittsansicht eines Abschnitts einer Stoffaustauschkolonne 1 gemäß einer oder mehreren Ausführungsformen.

Die Stoffaustauschkolonne 1 umfasst eine Vielzahl von übereinander angeordneten Böden 10 bzw. 10', die jeweils entsprechend einer der vorstehend beschriebenen Ausführungsformen ausgestaltet sein können. Die Stoffaustauschkolonne 1 kann eine Absorptionskolonne, eine Rektifikationskolonne, eine Strippkolonne oder eine Destillationskolonne sein.

Beispielsweise handelt es sich bei der Stoffaustauschkolonne 1 um eine Absorptionskolonne zur Herstellung von Salpetersäure.

Die Flüssigphase wird der Stoffaustauschkolonne 1 beispielsweise über einen Haupteingang 171 zugeführt und über einen Hauptausgang 172 abgeführt. Die Gasphase kann der Stoffaustauschkolonne 1 über einen zentralen Gaseingang 181 zugeführt und über einen zentralen Gasausgang 182 abgeführt werden. Die Flüssigphase wird in der Stoffaustauschkolonne 1 also in Lotrichtung Z geführt, und die Gasphase entgegen der Lotrichtung Z, wie eingangs schon ausgeführt worden ist. Um den Kontakt zwischen der Flüssigphase und der Gasphase sicherzustellen, kann jeder der Böden 10 bzw. 10' besagte Stoffaustauschelemente, beispielsweise Gasdurchtrittsöffnungen, umfassen.

Wie gesagt sind in der Stoffaustauschkolonne 1 die Böden 10 bzw. 10' übereinander angeordnet. Prinzip bedingt ergibt sich also, dass der Bodenablauf (s. Bezugsziffern 131 und 132 in Fig. 1) des jeweiligen oberen Bodens 10 bzw. 10' mit dem Bodenzulauf (s. Bezugsziffern 141 und 142 in Fig. 1) des darunterliegenden Bodens 10 bzw. 10' zu verbinden sind. Diese Aufgabe kann beispielsweise über einen sogenannten Downcomer erfolgen, was dem Fachmann grundsätzlich bekannt ist.

Nach der in der Fig. 6 gezeigten Variante ändert sich das Strömungsprinzip von Boden 10 zu Boden 10', sodass das Design der Downcomer zwischen den jeweiligen Böden 10, 10' einfach ausgeführt kann. Konkret verbindet der Downcomer die Ausgänge 141 und 142 von einem Boden 10 zu einem darunterliegenden Boden 10' entlang der Lotrichtung Z zu Komponenten des Boden 10' entsprechend den Ausgänge 141 und 142 des Bodens 10, die beim Boden 10' jedoch die Eingänge des Bodenzulaufs bilden. Beim Boden 10' strömt die Flüssigphase also vom Bodenzentrum entlang der halbkreisbahnförmigen Teilpfade zum Bodenablauf am Bodenrand, der durch Komponenten gebildet ist, die den Eingängen 131 und 132 des Bodens 10` entsprechen. Von dort führt ein nächster Downcomer, wieder entlang der Lotrichtung Z, aber fluchtend zum Bodenrand angeordnet, zum darunterliegenden Boden 10, der das Strömungsprinzip entsprechend der Fig. 1 umsetzen kann, u.s.w.

Bei der in der Fig. 5 gezeigten Variante sind alle Böden 10 im Wesentlichen gleichartig ausgebildet, was jedoch implizieren kann, dass die Ausgestaltung der Downcomer zwischen den jeweiligen Böden 10 aufwendiger ausfällt, da die bodenzentrumsnah angeordneten Ausgänge einen Downcomer erfordern können, der sich auch in radiale Richtung erstreckt, sodass diese mit den bodenrandnah angeordneten Eingängen des darunterliegenden Bodens verbunden werden können.

Wie hier verwendet, sind die Begriffe "umfassend", "aufweisend", "einschließend", und ähnliches offene Begriffe, welche das Vorhandensein von angeführten Elementen oder Merkmalen anzeigen, zusätzliche Elemente oder Merkmale jedoch nicht ausschließen.

## Patentansprüche

1. Boden (10) für eine Stoffaustauschkolonne (1), wobei der Boden (10) ausgebildet ist, um einen Kontakt zwischen einer Flüssigphase und einer Gasphase zu ermöglichen, und wobei der Boden (10) umfasst:
- einen Bodenzulauf (131, 132), über den der Boden (10) mit der Flüssigphase beschickt wird;
- einen Bodenablauf (141, 142), über den die Flüssigphase von dem Boden (10) abläuft;
- erste Führungsmittel (11) zum Führen der Flüssigphase, wobei die ersten Führungsmittel (11) einen ersten Verlaufspfad (21, 22) ausbilden, entlang dem die Flüssigphase vom Bodenzulauf (131, 132) zum Bodenablauf (141, 142) strömt;
- einen Einlass (15) für ein Temperierfluid;
- einen Auslass (16) für das Temperierfluid; und
- zweite Führungsmittel (12) zum Führen des Temperierfluids für einen Wärmeaustausch mit der Flüssigphase, wobei die zweiten Führungsmittel (12) einen mit dem ersten Verlaufspfad überlappenden zweiten Verlaufspfad (31, 32) ausbilden, der vom Einlass (15) zum Auslass (16) führt,
wobei:
- die ersten Führungsmittel (11) zum Führen der Flüssigphase den ersten Verlaufspfad (21, 22) mit wenigstens zwei konzentrisch zueinander angeordneten und jeweils teilkreisbahnförmig verlaufenden Teilpfaden (211, 212, 213, 221, 222, 223) ausbilden; und wobei
- das Temperierfluid entlang des zweiten Verlaufspfads (31, 32) in wenigstens einem der wenigstens zwei Teilpfade (211, 212, 213, 221, 222, 223) in einer zur Strömungsrichtung der Flüssigphase entgegengesetzten Richtung strömt,
- wobei die Flüssigphase in einem ersten der wenigstens zwei Teilpfade (211) entlang einer Drehrichtung strömt und in einem zweiten Teilpfad (212) in entgegengesetzter Drehrichtung.

2. Boden (10) nach Anspruch 1, wobei
- der Bodenzulauf einen ersten Eingang (131) umfasst, der an einem Rand (101) des Bodens (10) angeordnet ist;
- der Bodenablauf einen ersten Ausgang (141) umfasst, der in einem Zentrum (102) des Bodens (10) angeordnet ist; und
- die ersten Führungsmittel (11) konzentrisch angeordnete Leitwehre (111, 112) umfassen, die den ersten Verlaufspfad (21, 22) ausbilden.

3. Boden (10) nach einem der vorstehenden Ansprüche, wobei die zweiten Führungsmittel (12) zum Führen des Temperierfluids den zweiten Verlaufspfad (31, 32) mit einer Vielzahl konzentrisch zueinander angeordneter und jeweils teilkreisbahnförmig verlaufender Einzelpfade ausbilden.

4. Boden (10) nach einem der vorstehenden Ansprüche, wobei der Einlass (15) und der Auslass (16) für das Temperierfluid entlang einer das Zentrum des Bodens (102) kreuzenden Längsachse (A) angeordnet sind, welche den Boden (10) in einen ersten Abschnitt (103) und einen zweiten Abschnitt (104) unterteilt.

5. Boden (10) nach Anspruch 3 und nach Anspruch 4, wobei der Einlass (15) und der Auslass (16) für das Temperierfluid bezogen auf eine das Bodenzentrum (102) kreuzende Längsachse (A) um 180° zueinander versetzt angeordnet sind und die im ersten Abschnitt (103) des Bodens (10) vorgesehenen Einzelpfade des zweiten Verlaufspfads (31) das Temperierfluid nur in einer Drehrichtung führen, und wobei die im zweiten Abschnitt (104) des Bodens (10) vorgesehenen Einzelpfade des zweiten Verlaufspfads (32) das Temperierfluid nur in entgegengesetzter Drehrichtung führen.

6. Boden (10) nach Anspruch 2 und nach Anspruch 4 oder 5, wobei die ersten Führungsmittel (11) umfassen:
- wenigstens drei im ersten Abschnitt (103) des Bodens (10) angeordnete erste Leitwehre (111), die dort den ersten Verlaufspfad (21) mit wenigstens drei aneinander anknüpfende Teilpfade (211, 212, 213) ausbilden, die konzentrisch zueinander verlaufen, wobei die Flüssigphase die wenigstens drei Teilpfade (211, 212, 213) durchläuft und sich ihre Strömungsrichtung mit jedem Übergang zwischen zwei Teilpfaden um 180° ändert.

7. Boden (10) nach Anspruch 2 und nach Anspruch 4, 5 oder 6, wobei:
- der Bodenzulauf einen zweiten Eingang (132) umfasst, der am Rand (101) des Bodens (10) angeordnet ist;
- der Bodenablauf einen zweiten Ausgang (142) umfasst, der im Zentrum (102) des Bodens (10) angeordnet ist; wobei sich der erste Eingang (131) und der erste Ausgang (141) im ersten Abschnitt des Bodens (103) befinden, und wobei sich der zweite Eingang (132) und der zweite Ausgang (142) im zweiten Abschnitt des Bodens (104) befinden;
- die ersten Führungsmittel (11) wenigstens drei im zweiten Abschnitt (104) des Bodens (10) angeordnete zweite Leitwehre (112) umfassen, die dort den ersten Verlaufspfad (22) mit wenigstens drei aneinander anknüpfende Teilpfade (222, 222, 223) ausbilden, die konzentrisch zueinander verlaufen, wobei die Flüssigphase die wenigstens drei Teilpfade (221, 222, 223) durchläuft und sich ihre Strömungsrichtung mit jedem Übergang zwischen zwei Teilpfaden um 180° ändert.

8. Boden (10) nach einem der vorstehenden Ansprüche 4 bis 7, wobei die ersten Führungsmittel (11) eine entlang der Längsachse (A) angeordnete Trennwehranordnung (113) umfassen, die die Flüssigphase im ersten Abschnitt (103) von der Flüssigphase im zweiten Abschnitt (104) trennt.

9. Boden (10) nach einem der vorstehenden Ansprüche 4 bis 8, wobei sämtliche von den ersten Führungsmitteln (11) ausgebildete Teilpfade (211, 212, 213, 221, 222, 223) und sämtliche von den zweiten Führungsmitteln (12) ausgebildete Einzelpfade halbkreisbahnförmig sind.

10. Boden (10) nach Anspruch 5 und nach Anspruch 9, wobei sich die Strömungsrichtung der Flüssigphase mit jedem Übergang zwischen zwei Teilpfaden um 180° ändert.

11. Boden (10) nach Anspruch 10, wobei sich die Strömungsrichtung der Flüssigphase im ersten Abschnitt (103) und im zweiten Abschnitt (104) jeweils mindestens zwei Mal um 180° ändert.

12. Boden (10) nach einem der vorstehenden Ansprüche, wobei die zweiten Führungsmittel (12) als Rohrleitungen (121) ausgebildet sind, die für einen Kontakt mit der Flüssigphase angeordnet sind und sich parallel zum ersten Verlaufspfad (21, 22) erstrecken.

13. Boden (10) nach einem der vorstehenden Ansprüche, wobei der Boden (10) als Siebboden, Ventilboden, Glockenboden oder Tunnelboden ausgestaltet ist.

14. Stoffaustauschkolonne (1), umfassend eine Vielzahl von übereinander angeordneten Böden (10), die jeweils nach einem der vorstehenden Ansprüche ausgestaltet sind.

## Claims

1. A tray (10) for a mass transfer column (1), the tray (10) being adapted to allow contact between a liquid phase and a gas phase, the tray (10) comprising:
- a tray inlet (131, 132) via which the tray (10) is fed with the liquid phase;
- a tray outlet (141, 142) via which the liquid phase drains from the tray (10);
- first guide means (11) for guiding the liquid phase, the first guide means (11) forming a first path (21, 22) along which the liquid phase flows from the tray feed (131, 132) to the tray drain (141, 142);
- an inlet (15) for a tempering fluid;
- an outlet (16) for the tempering fluid; and
- second guide means (12) for guiding the tempering fluid for heat exchange with the liquid phase, the second guide means (12) forming a second flow path (31, 32) overlapping with the first flow path and leading from the inlet (15) to the outlet (16),
wherein:
- the first guide means (11) for guiding the liquid phase form the first course path (21, 22) with at least two sub-paths (211, 212, 213, 221, 222, 223) which are arranged concentrically with respect to one another and each run in the form of a pitch circle; and wherein
- the tempering fluid flows along the second path (31, 32) in at least one of the at least two sub-paths (211, 212, 213, 221, 222, 223) in a direction opposite to the direction of flow of the liquid phase
- wherein the liquid phase flows in a first of the at least two sub-paths (211) along one direction of rotation and in a second sub-path (212) in the opposite direction of rotation.

2. Tray (10) according to claim 1, wherein
- the tray inlet comprises a first inlet (131) arranged at an edge (101) of the tray (10);
- said tray drain comprises a first outlet (141) arranged at a center (102) of said tray (10); and
- said first guide means (11) comprise concentrically arranged guide weirs (111, 112) forming said first path of travel (21, 22).

3. Tray (10) according to one of the preceding claims, wherein the second guide means (12) for guiding the tempering fluid form the second course path (31, 32) with a plurality of individual paths arranged concentrically to one another and each extending in the form of a pitch circle.

4. Tray (10) according to one of the preceding claims, wherein the inlet (15) and the outlet (16) for the tempering fluid are arranged along a longitudinal axis (A) crossing the center of the tray (102), which divides the tray (10) into a first section (103) and a second section (104).

5. A tray (10) according to claim 3 and according to claim 4, wherein the inlet (15) and the outlet (16) for the tempering fluid are arranged offset from each other by 180° with respect to a longitudinal axis (A) crossing the center (102) of the tray, and wherein the individual paths of the second path (31) provided in the first section (103) of the tray (10) guide the tempering fluid only in one direction of rotation, and wherein the individual paths of the second flow path (32) provided in the second section (104) of the base (10) guide the temperature control fluid only in the opposite direction of rotation.

6. Tray (10) according to claim 2 and according to claim 4 or 5, wherein the first guiding means (11) comprise:
- at least three first guide weirs (111) arranged in the first section (103) of the tray (10), forming there the first routing path (21) with at least three interconnected sub-paths (211, 212, 213) running concentrically to each other, wherein the liquid phase passes through the at least three sub-paths (211, 212, 213) and its flow direction changes by 180° with each transition between two sub-paths.

7. Tray (10) according to claim 2 and according to claim 4, 5 or 6, wherein:
- the tray inlet comprises a second inlet (132) arranged at the edge (101) of the tray (10);
- the tray outlet comprises a second outlet (142) arranged in the center (102) of the tray (10); wherein the first inlet (131) and the first outlet (141) are located in the first portion of the tray (103), and wherein the second inlet (132) and the second outlet (142) are located in the second portion of the tray (104);
- the first guide means (11) comprise at least three second guide weirs (112) arranged in the second portion (104) of the tray (10), which second guide weirs (112) form there the first course path (22) with at least three adjoining sub-paths (222, 222, 223) which run concentrically to each other, wherein the liquid phase passes through the at least three sub-paths (221, 222, 223) and its flow direction changes by 180° with each transition between two sub-paths.

8. Tray (10) according to any one of the preceding claims 4 to 7, wherein the first guide means (11) comprise a separation weir arrangement (113) arranged along the longitudinal axis (A), which separates the liquid phase in the first section (103) from the liquid phase in the second section (104).

9. Tray (10) according to any of the preceding claims 4 to 8, wherein all sub-paths (211, 212, 213, 221, 222, 223) formed by the first guide means (11) and all individual paths formed by the second guide means (12) are semicircular.

10. Tray (10) according to claim 5 and according to claim 9, wherein the flow direction of the liquid phase changes by 180° with each transition between two sub-paths.

11. Tray (10) according to claim 10, wherein the flow direction of the liquid phase changes by 180° at least twice in each of the first section (103) and the second section (104).

12. Tray (10) according to any one of the preceding claims, wherein the second guide means (12) are formed as conduits (121) arranged for contact with the liquid phase and extending parallel to the first flow path (21, 22).

13. Tray (10) according to one of the preceding claims, wherein the tray (10) is designed as a sieve tray, valve tray, bell tray or tunnel tray.

14. Mass transfer column (1) comprising a plurality of trays (10) arranged one above the other, each tray being configured according to one of the preceding claims.

## Revendications

1. Plateau (10) pour une colonne d'échange de matière (1), le plateau (10) étant adapté pour permettre un contact entre une phase liquide et une phase gazeuse, le plateau (10) comprenant :
- une entrée de plateau (131, 132) par laquelle le plateau (10) est alimenté en phase liquide ;
- une évacuation de plateau (141, 142) par laquelle la phase liquide s'écoule du plateau (10)
- des premiers moyens de guidage (11) pour guider la phase liquide, les premiers moyens de guidage (11) formant un premier chemin d'écoulement (21, 22) le long duquel la phase liquide s'écoule de l'entrée du plateau (131, 132) vers la sortie du plateau (141, 142) ;
- une entrée (15) pour un fluide de régulation de température ;
- une sortie (16) pour le fluide de régulation de température ; et
- des deuxièmes moyens de guidage (12) pour guider le fluide de thermostatisation en vue d'un échange de chaleur avec la phase liquide, les deuxièmes moyens de guidage (12) formant un deuxième parcours (31, 32) qui se chevauche avec le premier parcours et qui mène de l'entrée (15) à la sortie (16),
où :
- les premiers moyens de guidage (11) destinés à guider la phase liquide forment le premier chemin partiel (21, 22) avec au moins deux chemin partiels partiels (211, 212, 213, 221, 222, 223) disposés concentriquement l'un par rapport à l'autre et s'étendant chacun en forme de trajectoire circulaire partielle ; et dans lequel
- le fluide de régulation de température s'écoule le long de la deuxième voie d'écoulement (31, 32) dans au moins l'une des au moins deux voies partielles (211, 212, 213, 221, 222, 223) dans une direction opposée à la direction d'écoulement de la phase liquide,
- la phase liquide s'écoulant dans un sens de rotation dans un premier des au moins deux chemins partiels (211) et dans le sens de rotation opposé dans un deuxième chemin partiel (212).

2. Plateau (10) selon la revendication 1, dans lequel
- l'arrivée de plateau comprend une première entrée (131) disposée sur un bord (101) du plateau (10) ;
- la descente de plateau comprend une première sortie (141) située au centre (102) du plateau (10) ; et
- les premiers moyens de guidage (11) comprennent des déflecteurs (111, 112) disposés de manière concentrique, qui forment le premier chemin de parcours (21, 22).

3. Plateau (10) selon l'une des revendications précédentes, dans lequel les deuxièmes moyens de guidage (12) destinés à guider le fluide de régulation de température forment le deuxième chemin partiel (31, 32) avec une pluralité de chemin partiels individuels disposés de manière concentrique les uns par rapport aux autres et s'étendant chacun en forme de trajectoire circulaire partielle.

4. Plateau (10) selon l'une des revendications précédentes, dans lequel l'entrée (15) et la sortie (16) du fluide de régulation de température sont disposées le long d'un axe longitudinal (A) qui croise le centre du plateau (102) et qui divise le plateau (10) en une première section (103) et une deuxième section (104).

5. Plateau (10) selon la revendication 3 et selon la revendication 4, dans lequel l'entrée (15) et la sortie (16) pour le fluide de régulation de température sont décalées de 180° l'une par rapport à l'autre par rapport à un axe longitudinal (A) croisant le centre du plateau (102) et les voies individuelles du deuxième parcours (31) prévues dans la première section (103) du plateau (10) ne guident le fluide de régulation de température que dans un sens de rotation, et les chemins individuels du deuxième parcours (32) prévus dans la deuxième section (104) du plateau (10) ne guidant le fluide de thermostatisation que dans le sens de rotation opposé.

6. Plateau (10) selon la revendication 2 et selon la revendication 4 ou 5, dans lequel les premiers moyens de guidage (11) comprennent :
- au moins trois premiers déversoirs (111) disposés dans la première section (103) du plateau (10), qui y forment le premier chemin de parcours (21) avec au moins trois chemins partiels (211, 212, 213) se raccordant les uns aux autres, qui s'étendent concentriquement les uns par rapport aux autres, la phase liquide parcourant les au moins trois chemins partiels (211, 212, 213) et son sens d'écoulement changeant de 180° à chaque transition entre deux chemins partiels.

7. Plateau (10) selon la revendication 2 et selon la revendication 4, 5 ou 6, dans lequel :
- l'arrivée de plateau comprend une deuxième entrée (132) disposée sur le bord (101) du plateau (10) ;
- la descente de plateau comprend une deuxième sortie (142) située au centre (102) du plateau (10) ; la première entrée (131) et la première sortie (141) étant situées dans la première portion du plateau (103), et la deuxième entrée (132) et la deuxième sortie (142) étant situées dans la deuxième portion du plateau (104) ;
- les premiers moyens de guidage (11) comprennent au moins trois deuxièmes déversoirs (112) disposés dans la deuxième section (104) du plateau (10), qui y forment le premier chemin d'écoulement (22) avec au moins trois chemins partiels (222, 222, 223) se raccordant les uns aux autres, qui s'étendent concentriquement les uns aux autres, la phase liquide traversant les au moins trois chemins partiels (221, 222, 223) et sa direction d'écoulement changeant de 180° à chaque transition entre deux chemins partiels.

8. Plateau (10) selon l'une quelconque des revendications 4 à 7 précédentes, dans lequel les premiers moyens de guidage (11) comprennent un ensemble de barrières de séparation (113) disposées le long de l'axe longitudinal (A) et séparant la phase liquide dans la première portion (103) de la phase liquide dans la deuxième portion (104).

9. Plateau (10) selon l'une quelconque des revendications 4 à 8 précédentes, dans lequel tous les chemins partiels (211, 212, 213, 221, 222, 223) formés par les premiers moyens de guidage (11) et tous les chemins individuels formés par les seconds moyens de guidage (12) sont en forme de piste semi-circulaire.

10. Plateau (10) selon la revendication 5 et selon la revendication 9, dans lequel le sens d'écoulement de la phase liquide change de 180° à chaque transition entre deux chemins partiels.

11. Plateau (10) selon la revendication 10, dans lequel la direction d'écoulement de la phase liquide change de 180° au moins deux fois dans la première section (103) et dans la deuxième section (104).

12. Plateau (10) selon l'une quelconque des revendications précédentes, dans lequel les deuxièmes moyens de guidage (12) sont constitués par des conduits (121) agencés pour être en contact avec la phase liquide et s'étendant parallèlement au premier chemin d'écoulement (21, 22).

13. Plateau (10) selon l'une des revendications précédentes, dans lequel le plateau (10) est conçu comme un plateau à tamis, un plateau à vanne, un plateau à cloche ou un plateau à tunnel.

14. Colonne de transfert de masse (1), comprenant une pluralité de plateaux (10) superposés, chacun étant configuré selon l'une des revendications précédentes.
